# EUROPEAN PATENT APPLICATION

(11) **EP 3 537 366 A1**
(43) Date of publication of application: **11.09.2019**
(21) Application number: 18160955.3
(22) Date of filing: 09.03.2018
(51) Int. Cl.: G06Q 30/02, G06F 17/30

(54) **SYSTEM AND METHOD FOR DYNAMIC ADVERTISEMENT CONTENT IN A DIGITAL MEDIA CONTENT ENVIRONMENT**

(71) Applicant: Spotify AB, 111 53 Stockholm (SE)
(72) Inventor: CARPITA, Chris, New York, New York 10011 (US); BITTNER, Rachel, New York, New York 10011 (US); NICHOLS, Zachary, New York, New York 10011 (US); RAYMOND, Sarah, New York, New York 10011 (US)
(74) Representative: Ström & Gulliksson AB

(57) **Abstract**

In accordance with an embodiment, described herein are systems and methods for generation or selection of advertisement content or creatives (dynamic advertisements), in real-time, for use with a digital media content environment and media content streams. A media server enables streaming of media content to client media devices. An advertisement generation service can receive data or information describing, for example, a user profile associated with a user, to determine demographic data or information, and/or a metadata describing the media content played by the user within a current streaming session, and generate or select, in real-time, a dynamic advertisement for use with the streaming session. A dynamic advertisement can include a combination of background audio content (a background track), with voiceover audio content (a voiceover track), which is determined to be suitable in music style for playing within the current streaming session and/or to target the user's demographic data or information.

## Description

### Technical Field

Embodiments of the invention are generally related to digital media content environments, and to methods for providing advertisement content, and are particularly directed to systems and methods for generation or selection of advertisement content or creatives, in real-time, for use with media content streams.

### Background

In the advertising industry, the selection and distribution of advertisements to a population of users, as part of an advertising campaign, is often determined by the demographics of that population. For example, the advertising campaign can deliver a particular advertisement to users within a target demographic group; with the style of advertisement being chosen as one that is likely to appeal to a typical user within that target group.

In the context of a digital media content environment, in which an electronic device such as a laptop computer, tablet, smartphone, smart watch, or other mobile device, can be used as a media device for playing music or video content, a selection of advertisements can be delivered, for example as audio advertisements, within or as part of a user's media content stream.

However, if the target population includes a wide variety of users having different demographics, then a particular advertisement may not appeal equally to each group of users. Additionally, in the context of a digital media content environment, introducing an advertisement into a media content streaming session which is perhaps noticeably different in music style from other media content played within that streaming session, can negatively affect the user experience, potentially resulting in user dissatisfaction.

### Summary

It is in view of the above considerations and others that the various embodiments described herein have been made.

It is a general object of the various embodiments described herein to provide improved systems and methods that allow for the generation or the selection of advertisement content or creatives, in real-time, for use with media content streams.

This general object has been addressed by the appended independent claims. The appended dependent claims define advantageous embodiments.

In accordance with an embodiment, described herein are therefore systems and methods for generation or selection of advertisement content or creatives (dynamic advertisements), in real-time, for use with a digital media content environment and media content streams. A media server enables streaming of media content to client media devices. An advertisement generation service can receive data or information describing, for example, a user profile associated with a user, to determine demographic data or information, and/or a metadata describing the media content played by the user within a current streaming session, and generate or select, in real-time, a dynamic advertisement for use with the streaming session. A dynamic advertisement can include a combination of background audio content (a background track), with voiceover audio content (a voiceover track), which is determined to be suitable in music style for playing within the current streaming session and/or to target the user's demographic data or information.

In accordance with an embodiment, a technical purpose of the systems and methods described herein includes the automated determination of content data to be streamed within a streaming session, by selecting and combining ones of multiple background audio contents and/or voiceover audio contents, based on the characteristics of a user profile and current streaming session.

In accordance with an embodiment, a system for generation or selection of advertisement content in real-time, for use with a digital media content environment and media content streams, comprises one or more computers, including a media server executing thereon that is configured to receive requests from client devices for media content, and to stream media content, including advertisement content, to the client devices in response to the requests; and a memory provided at the one or more computers, storing instructions that, when executed, cause the system to, while a stream of media content from the media server is playing at a client device associated with a particular user, as a current media content stream: receive an indication to generate advertisement content to be inserted into the current media content stream playing at the client device, determine, in response to the indication, metadata associated with the media content being streamed, and user demographic data or information associated with the particular user, at least one of generate or select an advertisement content that includes a background audio content and a voiceover audio content, based at least partly on one or more of the metadata, and the user demographic data or information, and insert the advertisement content into the current media content stream.

In accordance with an embodiment, a method for generation or selection of advertisement content in real-time, for use with a digital media content environment and media content streams, comprises: while a stream of media content from the media server is playing at a client device associated with a particular user, as a current media content stream, receiving an indication to generate advertisement content to be inserted into the current media content stream playing at the client device; determining, in response to the indication, metadata associated with the media content being streamed, and user demographic data or information associated with the particular user; at least one of generating or selecting an advertisement content that includes a background audio content and a voiceover audio content, based at least partly on one or more of the metadata, and the user demographic data or information; and inserting the advertisement content into the current media content stream.

In accordance with an embodiment, a non-transitory computer readable storage medium includes instructions stored thereon that when read and executed by one or more computers cause the one or more computers to perform the method comprising providing, at one or more computers, a media server executing thereon that is configured to receive requests from client devices for media content, and to stream media content, including advertisement content, to the client devices in response to the requests; and while a stream of media content from the media server is playing at a client device associated with a particular user, as a current media content stream, receiving an indication to generate advertisement content to be inserted into the current media content stream playing at the client device; determining, in response to the indication, metadata associated with the media content being streamed, and user demographic data or information associated with the particular user; at least one of generating or selecting an advertisement content that includes a background audio content and a voiceover audio content, based at least partly on one or more of the metadata, and the user demographic data or information; and inserting the advertisement content into the current media content stream.

In accordance with an embodiment, a process for use by a digital media content environment for determining a collection of voiceover tracks, comprises determining a set of available voice profiles for a particular user demographic segment; receiving usage data associated with users within the particular user demographic segment is received, wherein the usage data corresponds to user interactions received at the media application or media device in response to streamed content, including advertisement content; for each user within the particular user demographic segment, constructing a voiceover profile based on the usage data, wherein the voiceover profile indicates the likelihood of each voice profile within the set of available voice profiles being associated with a positive user response; for each voice profile within the set of available voice profiles, determining an overall voiceover score is by analyzing a plurality of voiceover profiles for users within the particular demographic segment; selecting one or more voice profiles from the set of available voice profiles, for use in creating a collection of voiceover tracks for the particular user demographic segment; and using a voiceover script and the selected voice profiles to create a collection of voiceover tracks, wherein each voiceover within the collection associated with a selected voice profile from the set of voice profile.

Other objectives, features and advantages of the described embodiments will be apparent from the following detailed disclosure, claims, and drawings.

### Brief Description of the Drawings

**Figure 1** illustrates an example digital media content environment, in accordance with an embodiment.
**Figure 2** illustrates an example use of a digital media content environment to provide audio advertisements, in accordance with an embodiment.
**Figure 3** further illustrates an example use of a digital media content environment to provide audio advertisements, in accordance with an embodiment.
**Figure 4** illustrates the generation of dynamic advertisements, in accordance with an embodiment.
**Figure 5** further illustrates the generation of dynamic advertisements, in accordance with an embodiment.
**Figure 6** further illustrates the generation of dynamic advertisements, including use of voice profiles, in accordance with an embodiment.
**Figure 7** illustrates a system for generation of dynamic advertisement content, including a data processing topology, in accordance with an embodiment.
**Figure 8** further illustrates a system for generation of dynamic advertisement content, in accordance with an embodiment.
**Figure 9** illustrates a process for generating dynamic advertisements, in accordance with an embodiment.
**Figure 10** illustrates a process for determining a collection of voiceover tracks, in accordance with an embodiment.

### Detailed Description

The foregoing, together with additional embodiments and features thereof will become apparent upon referring to the following description including specification, claims, and accompanying drawings. In the following description, for purposes of explanation, specific details are set forth in order to provide a thorough understanding of various embodiments of the invention. However, it will be apparent that various embodiments can be practiced without these specific details. The following description including specification, claims, and accompanying drawings are not intended to be restrictive.

As described above, in the advertising industry, if a target population includes a wide variety of users having different demographics, then a particular advertisement may not appeal equally to each group of users.

Additionally, in the context of a digital media content environment, introducing an advertisement into a media content streaming session which is perhaps noticeably different in music style from other media content played within that streaming session, can negatively affect the user experience, potentially resulting in user dissatisfaction. In addition, lower advertisement uptake could be a further disadvantage.

In accordance with an embodiment, described herein are systems and methods for generation or selection of advertisement content or creatives (dynamic advertisements), in real-time, for use with a digital media content environment and media content streams.

In accordance with an embodiment, a media server enables streaming of media content to client media devices. An advertisement generation service can receive data or information describing, for example, a user profile associated with a user, to determine demographic data or information, and/or a metadata describing the media content played by the user within a current streaming session, and generate or select, in real-time, a dynamic advertisement for use with the streaming session.

In accordance with an embodiment, a dynamic advertisement can include a combination of background audio content (a background track), with voiceover audio content (a voiceover track), which is determined to be suitable in music style for playing within the current streaming session and/or to target the user's demographic data or information.

### Digital Media Content Environments

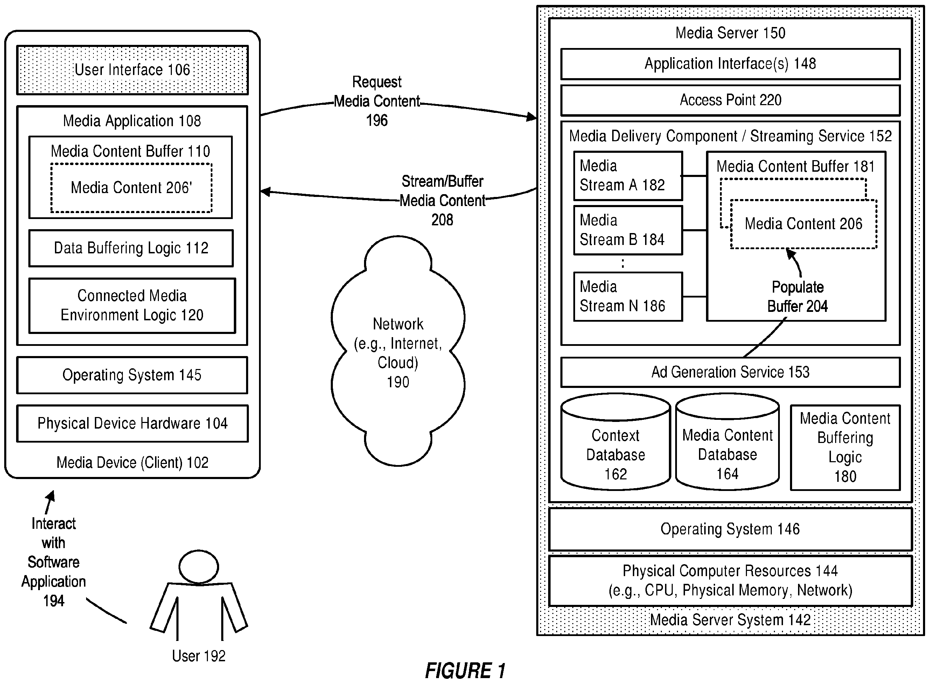

**Figure 1** illustrates an example digital media content environment, in accordance with an embodiment.

As illustrated in Figure 1, in accordance with an embodiment, a media device 102, operating as a client device, can receive and play media content provided by a media server system 142 (media server), or by another system or peer device. In accordance with an embodiment, the media device can be, for example, a personal computer system, handheld entertainment device, tablet device, smartphone, television, audio speaker, in-car entertainment system, or other type of electronic or media device that is adapted or able to prepare a media content for presentation, control the presentation of media content, and/or play or otherwise present media content.

In accordance with an embodiment, each of the media device and the media server can include, respectively, one or more physical device or computer hardware resources 104, 144, such as one or more processors (CPU), physical memory, network components, or other types of hardware resources; and an operating system 145, 146 or other processing environment.

Although, for purposes of illustration, a single client media device and media server are shown, in accordance with an embodiment a media server can support the simultaneous use of a plurality of client media devices. Similarly, in accordance with an embodiment, a client media device can access media content provided by a plurality of media servers, or switch between different media content streams produced by one or more media servers.

In accordance with an embodiment, the media device can optionally include a touch-enabled or other type of display screen having a user interface 106, which is adapted to display media options, for example as an array of media tiles, thumbnails, or other format, and to determine a user interaction or input. Selecting a particular media option, for example a particular media tile or thumbnail, can be used as a command by a user and/or the media device, to the media server, to download, stream or otherwise access a corresponding particular media content item or stream of media content.

In accordance with an embodiment, the media device can also include a software media application 108, together with an in-memory client-side media content buffer 110, and a client-side data buffering logic or software component 112, which can be provided as software or program code that is executable by a computer system or other processing device, and which can be used to control the playback of media content received from the media server, for playing either at a requesting media device (i.e., controlling device) or at a controlled media device (i.e., controlled device), in the manner of a remote control.

In accordance with an embodiment, a connected media environment logic or software component 120, which can be provided as software or program code that is executable by a computer system or other processing device, can be provided at the media device, either as part of the media application, or separately, for example as a firmware, to enable the media device to participate within a connected media environment (e.g., a Spotify Connect environment) that enables a user to control the playback of media content at such controlled devices.

In accordance with an embodiment, the client-side data buffering logic, together with the media content buffer, enables a portion of media content items, or samples thereof, to be pre-buffered at a client media device. For example, while media options are being prepared for display on a user interface, e.g., as media tiles or thumbnails, their related media content can be pre-buffered at the same time, and cached by one or more media devices in their media content buffers, for prompt and efficient playback when required.

In accordance with an embodiment, the media server can include an operating system or other processing environment which supports execution of a media server 150 that can be used, for example, to stream music, video, or other forms of media content to a client media device, or to a controlled device.

In accordance with an embodiment, the media server can provide a subscription-based media content streaming service, for which a client media device or user can have an associated account and credentials, and which enable the user's media device to communicate with and receive content from the media server. A received media-access request from a client media device can include data or information such as, for example, a network address, which identifies a destination media device to which the media server should stream or otherwise provide media content, in response to processing the media-access request.

For example, a user may own several media devices, such as a smartphone and an audio speaker, which can play media content received from a media server. In accordance with an embodiment, identifying data or information provided with a media-access request can include an identifier, such as an IP address, MAC address, or device name, which identifies that the media-access request is intended for use with a particular destination device. This allows a user, for example, to use their smartphone as a controlling device, and their audio speaker as a controlled device to which media content should be sent. The media server can then send the requested media and/or forward the media-access request to the audio speaker, even though the request originated at the user's smartphone.

In accordance with an embodiment, one or more application interface(s) 148 can receive requests from client media devices, or from other systems, to retrieve media content from the media server. A context database 162 can store data associated with the presentation of media content by a client media device, including, for example, a current position within a media content stream that is being presented by the media device, or a playlist associated with the media content stream, or one or more previously-indicated user playback preferences. The media server can transmit context data or information associated with a media content stream to a media device that is presenting that stream, so that the context data or information can be used by the device, and/or displayed to the user. The context database can be used to store a media device's current media state at the media server, and synchronize that state between devices, in a cloud-like manner. Alternatively, media state can be shared in a peer-to-peer manner, wherein each device is aware of its own current media state which is then synchronized with other devices as needed.

For example, in accordance with an embodiment, when the destination media device to which the media content is being streamed changes, say from a controlling device to a controlled device, or from a first controlled device to a second controlled device, then the media server can transmit context data or information associated with an active media content to the newly-appointed destination device, for use by that device in playing the media content.

In accordance with an embodiment, a media content database 164 can include media content, for example music, songs, videos, movies, or other media content, together with metadata describing that media content. The metadata can be used to enable users and client media devices to search within repositories of media content, to locate particular media content items.. In accordance with an embodiment, the metadata can also be used by the system to support features such as the generating of dynamic advertisement or other sponsor-directed content.

In accordance with an embodiment, a server-side media content buffering logic or software component 180, which can be provided as software or program code that is executable by a computer system or other processing device, can be used to retrieve or otherwise access media content items, in response to requests from client media devices or other systems, and to populate a server-side media content buffer 181, at a media delivery component or streaming service 152, which can be similarly provided as software or program code that is executable by a computer system or other processing device, with streams 182, 184, 186 of corresponding media content data, which can then be returned to the requesting device or to a controlled device.

As further described below, in accordance with an embodiment, an advertisement generation service (ad generation service) 153, can generate an advertisement content which is/are to be combined or otherwise associated with a particular stream or session of media content playback (e.g., a current media content stream), including dynamic advertisements, as described in further detail below.

For example, in accordance with an embodiment, the advertisement generation service can receive data or information describing, for example, a user profile associated with a user, to determine demographic data or information, and/or a metadata describing the media content played by the user within a current streaming session, and generate or select, in real-time, a dynamic advertisement for use with the streaming session. The advertisement generation service can then populate the media content buffer with streams of corresponding media content data, including the generated advertisement content 154, which can then be returned to a requesting media device, or to a controlled device.

In accordance with an embodiment, a plurality of client media devices, media server systems, and/or controlled devices, can communicate with one another using a network, for example the Internet 190, a local area network, peer-to-peer connection, wireless or cellular network, or other form of network. For example, a user 192 can interact 194 with the user interface at a client media device, and issue requests to access media content, for example the playing of a selected music or video item at their device, or at a controlled device, or the streaming of a media channel or video stream to their device, or to a controlled device.

In accordance with an embodiment, the user's selection of a particular media option can be communicated 196 to the media server, via the server's application interface. The media server can populate its server-side media content buffer at the server 204, with corresponding media content, 206 including one or more streams of media content data, and can then communicate 208 the selected media content to the user's media device, or to a controlled device as appropriate, where it can be buffered in a client-side media content buffer for playing at the device.

In accordance with an embodiment, and as further described below, the system can include a server-side media gateway or access point 220, provided as software or program code that is executable by a computer system or other processing device, or other process or component, which operates as a load balancer in providing access to one or more servers, for use in processing requests at those servers. The system can enable communication between a client media device and a server, via an access point at the server, and optionally the use of one or more routers, to allow requests from the client media device to be processed either at that server and/or at other servers.

For example, in a Spotify media content environment, Spotify clients operating on media devices can connect to various Spotify back-end processes via a Spotify "accesspoint", which forwards client requests to other servers, such as sending one or more metadataproxy requests to one of several metadataproxy machines, on behalf of the client or end user.

### Audio Advertisements

Some digital media content environments enable audio advertisements to be associated with their streaming of media content. For example, during the streaming of media content to a media device, the media server and/or a third-party advertisement server can cause an audio advertisement to be inserted into the stream, for playback at the media device.

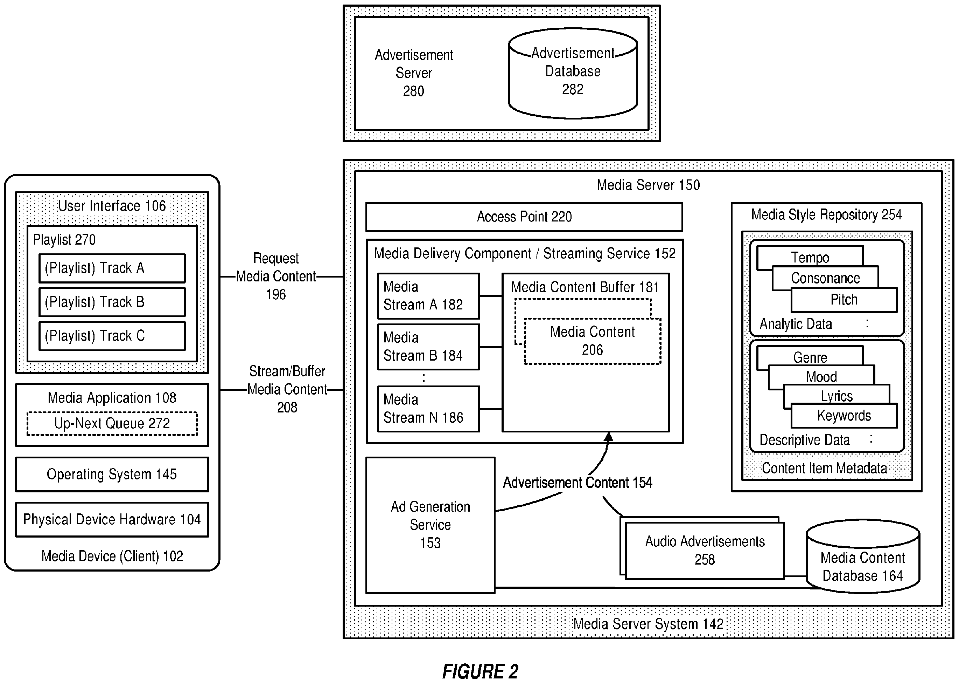

**Figure 2** illustrates an example use of a digital media content environment to provide audio advertisements, in accordance with an embodiment.

As illustrated in Figure 2, in accordance with an embodiment, a user can interact with a media device or client, and issue requests to access media content at a media server, for example, to stream music, video, or other forms of media content to the media device. In response, the media server can populate a media content buffer with corresponding items of media, for example as one or more streams of media content and/or advertisement content, and communicate the media content to the user's media device.

In accordance with an embodiment, the advertisement generation service can be used to determine an appropriate audio advertisement, which can be combined or otherwise associated with a particular stream or session of media content playback.

For example, in accordance with an embodiment, the media server can include a media style repository 254, as further described below, that stores media content item metadata associated with different items of media content, for use in providing music-styled and/or contextual data or information about the media content. The media delivery component / streaming service, in combination with the advertisement generation service, can determine an appropriate media content, and/or audio advertisement 258, for streaming within a particular session, for example as a playlist 270 having a plurality of tracks.

In accordance with an embodiment, the media application can operate with the media server to maintain a queue data structure, referred to herein in accordance with some embodiments as an "up-next" queue 272, which indicates one or more items of media content, as determined by a current playlist, and/or audio advertisements, that are scheduled to be played at the media device.

Alternatively and/or additionally, in accordance with an embodiment, a third-party advertisement server 280 such as, for example, a DoubleClick for Publishers (DFP) advertisement server, together with an advertisement database 282, can be used in connection with the media server to help manage a content provider's advertising campaigns and satisfy orders from advertising partners.

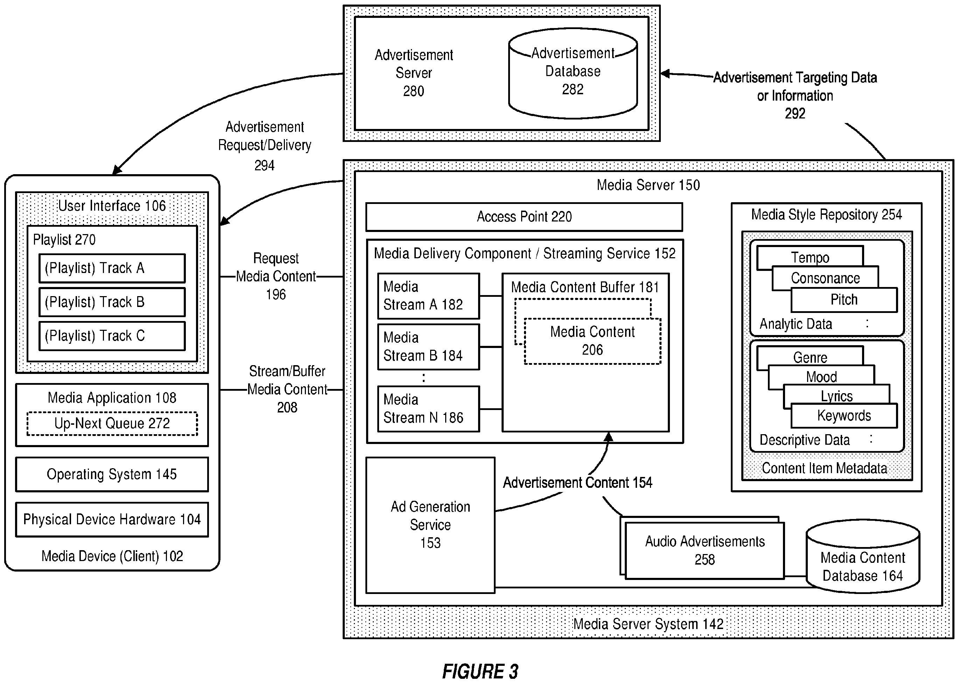

**Figure 3** further illustrates an example use of a digital media content environment to provide audio advertisements, in accordance with an embodiment.

As illustrated in Figure 3, in accordance with an embodiment, advertising targeting data or information 292 can be shared between the media server and the third-party advertisement server, for use in determining an audio advertisement to be inserted into a stream, for playback at the media device.

For example, during the playing of media content associated with a playlist, an audio advertisement, as determined by the media server or third-party advertisement server, can be inserted either into the playlist, and/or the up-next queue, for playback by the media application at the media device.

In accordance with an embodiment, the media application at the client media device, can make a call 294, either to the third-party advertisement server, or to the media server, requesting that an audio advertisement be directly provided by the third-party advertisement server or media server, to the media device, for playback at the media device. In such environments, the third-party advertisement server or media server can then make a determination as to which particular advertisement to deliver.

Alternatively, in accordance with an embodiment, a code/tag can be used to retrieve a particular audio advertisement either from the media server, or from the third-party advertisement server.

For example, in accordance with an embodiment, the third-party advertisement server can be used to determine which audio advertisement should be provided, and use redirection, in combination with a code/tag, to cause the client to retrieve the appropriate content from the media server, for example by providing the code/tag to the client, which the client can then use to request the corresponding content from the media server.

In such embodiments, the third-party advertisement server can be responsible for selecting or determining an advertisement, with the media server being responsible for receiving the requests from the clients and delivering the advertisement to the media device.

### Dynamic Advertisements

In accordance with an embodiment, the system enables dynamic generation of advertisement content or creatives (dynamic advertisements), in real-time, for use with a digital media content environment and media content streams.

In accordance with an embodiment, the advertisement generation service can receive data or information describing, for example, a user profile associated with a user, to determine demographic data or information, and/or a metadata describing the media content played by the user within a current streaming session, and generate or select, in real-time, a dynamic advertisement for use with the streaming session.

In accordance with an embodiment, a dynamic advertisement can include a combination of background audio content (a background track), with voiceover audio content (a voiceover track), which is determined to be suitable in music style for playing within the current streaming session and/or to target the user's demographic data or information.

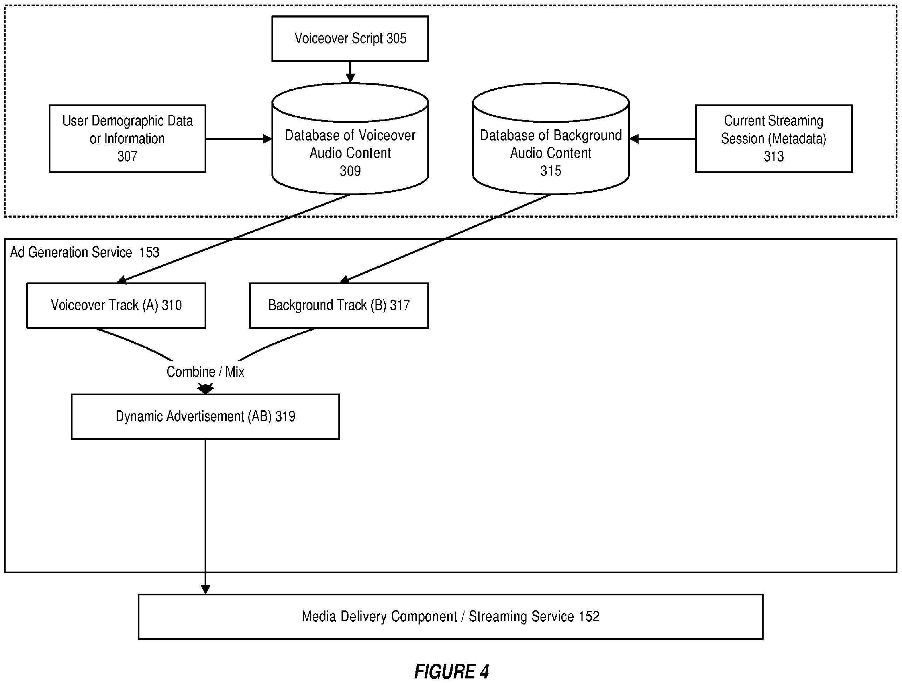

**Figure 4** illustrates the generation of dynamic advertisements, in accordance with an embodiment.

As illustrated in Figure 4, in accordance with an embodiment, data describing a user's demographic data or information 307 and/or metadata describing a user's current streaming session 313 can be used to determine which of a plurality of background tracks and voiceover tracks are most likely to be associated with a positive user response, when used as part of an advertising campaign.

In accordance with an embodiment, the system can include, or provide access to, a database or collection of voiceover audio content 309. The voiceover audio content can include a plurality of voiceover tracks that have been previously created by different voiceover recording artists, based on a voiceover script 305. The voiceover tracks can be stored as computer readable data in a suitable file format, such as MP3 or WAV data format files.

In accordance with an embodiment, the system can also include or provide access to a database or library of background audio content 315, which can be similarly created by different music recording artists, and stored as computer readable data in a suitable file format, such as MP3 or WAV data format; or alternatively can be provided in the same manner as other media content items from a media content database as described above.

In accordance with an embodiment, a user's demographic data or information can include data or information such as, for example, the user's gender, age, location, language, or a taste profile indicative of their general preference in music types, and can be stored in, updated as appropriate, and subsequently retrieved from, a user profile data associated with that user.

In accordance with an embodiment, the voiceover audio content can include, for each voiceover script, a plurality of different types of voiceover tracks incorporating the voiceover script, each of which has been determined as particularly suited to target a different demographic segment of a larger target population, as further described below.

As illustrated in Figure 4, in response to receiving an indication to generate an advertisement content, to be inserted into a current media content stream, for example as part of an advertising campaign, the advertisement generation service can generate or select a dynamic advertisement 319 that includes a combination of a particular background track 317, and a particular voiceover track 310, for insertion as combined into the current media content stream.

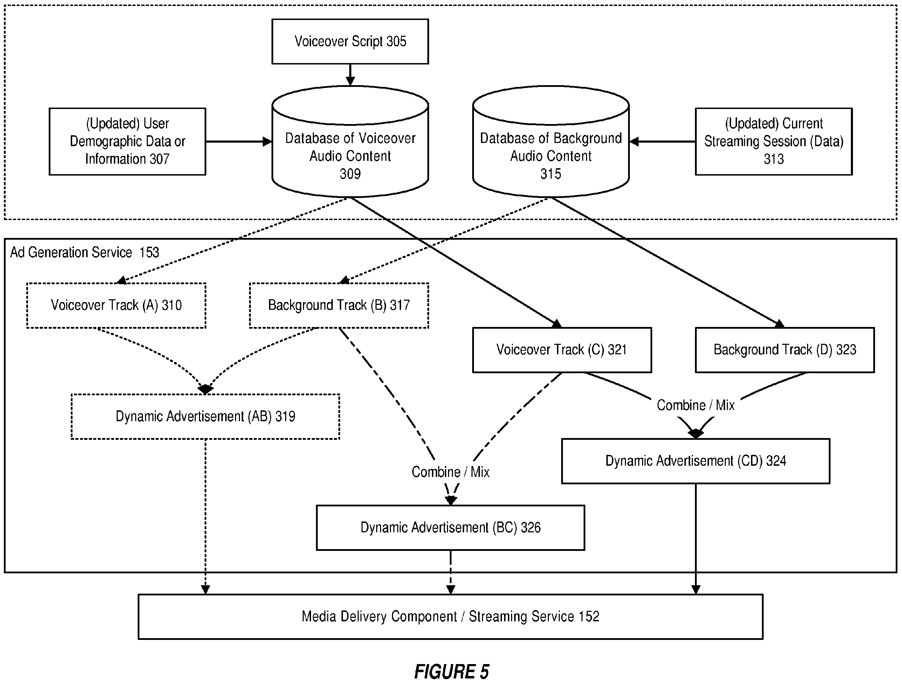

**Figure 5** further illustrates the generation of dynamic advertisements, in accordance with an embodiment.

As illustrated in Figure 5, in accordance with an embodiment, in response to a change in the user's demographic data or information and/or metadata describing a user's current streaming session, for example due to a different user being evaluated, or due to updates to the user's streaming history, the advertisement generation service can generate or select one or more different dynamic advertisements 324, 326, each of which can include a different combination of background track (e.g., 323) and/or voiceover track (e.g., 321), for insertion into the current media content stream.

### Voice Profiles

As described above, in accordance with an embodiment, the system can include a database or collection of voiceover audio content, which can include, for each voiceover script, a plurality of different types of voiceover tracks incorporating the voiceover script, each of which has been determined as particularly suited to target a different demographic segment of a larger target population.

In accordance with an embodiment, a set of available voice profiles can be defined regionally for a particular target audience, such that the set of available voice profiles defined for users in, e.g., Latin America, can be different from the set of available voice profiles for users in, e.g., the United States of America, for use with implementing advertising campaigns in those various regions.

For example, a particular target audience for an advertising campaign may be young people located either in Sweden or in the United Kingdom, between the ages of 13 and 16 years of age. To address these target demographics, the system may include a plurality of different voice profiles and voiceover tracks, including a first set in of voice profiles in the Swedish language, intended for Swedish users, and another set in the English languages, intended for users in the United Kingdom.

As another example, a particular target audience for an advertising campaign may be people located in various regions of the United States of America, between the ages of 20 and 30 years of ages. To address these target demographics, the system may include a plurality of different voice profiles and voiceover tracks, including different voice types for different regions, to address the different demographics of those various regions, and which are more likely to appeal to the different users in those regions.

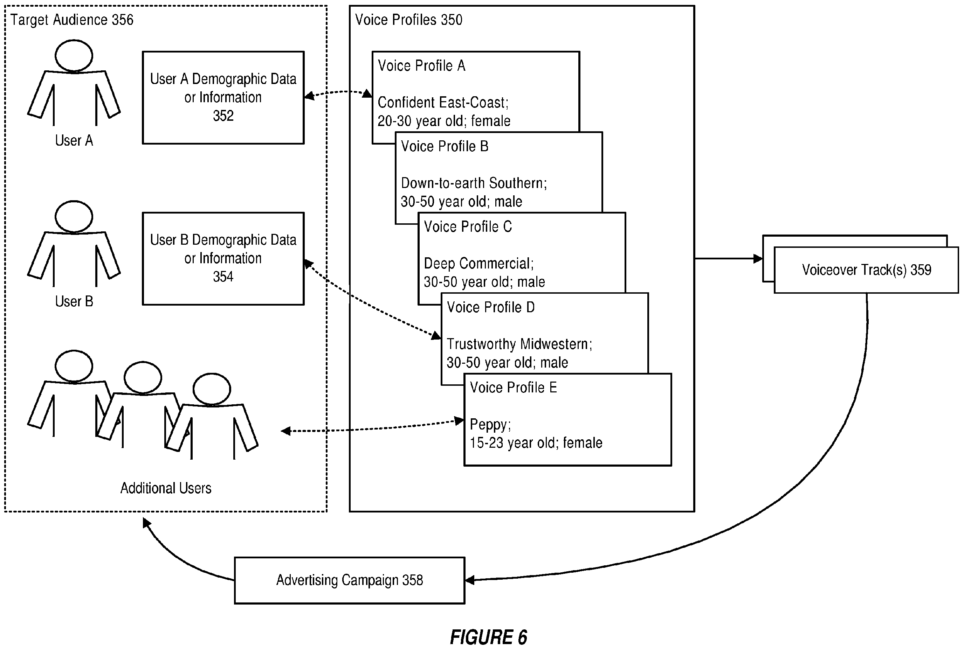

**Figure 6** further illustrates the generation of dynamic advertisements, including use of voice profiles, in accordance with an embodiment.

As illustrated, in Figure 6, in accordance with an embodiment, each voice profile within a set of available voice profiles 350, describes one or more attributes or sound qualities of a voice associated therewith, such as a personality trait, a location, and an age (or age range).

For example, a set of available voice profiles can include a Voice Profile A describing a Confident East Coast 20-30 year old female; a Voice Profile B describing a Down-to-Earth Southern 30-50 year old male; a Voice Profile C describing a Deep commercial 30-50 year old male; a Voice Profile D describing a Trustworthy Midwestern 30-50 year old female; and a Voice Profile E describing a Peppy 15-23 year old female.

Data or information describing various other attributes or sound qualities of a voice, such as, for example, speaking pace, energy level, volume, language, accent, or pitch, can also be included in a voice profile. The above are provided by way of example, to illustrate the techniques described herein, and are not intended to be limiting as to the types of voice profiles and/or other attributes or sound qualities that can be used.

In accordance with an embodiment, an advertiser can populate the database or collection of voiceover audio content by selecting a set of available voice profiles appropriate for an advertising campaign and target audience 356, each suited for use with a different demographic data or information, and recording a plurality of voiceover tracks incorporating the same voiceover script, for example by using different voiceover artists corresponding to the voice profiles, or automatically by the system using text-to-voice processing techniques.

In accordance with an embodiment, the system can determine, for a particular user, which voice profile(s) of a set of available voice profiles that are associated with the user's demographic (e.g., A 352, B 354) are most likely to be associated with a positive user response from the user.

For example, in accordance with an embodiment, a voiceover score can be determined for each voice profile, which corresponds to the determined likelihood for a particular user for that voice profile. The voiceover score for a particular user can be determined by analyzing usage data associated with the user's response to previously streamed advertisement content, and/or the responses of other users to previously streamed advertisement content.

In accordance with an embodiment, the other users considered can be, for example, other users within a same demographic segment as the particular user, or other users associated with user profiles similar to the user's own profile. The system can select a voiceover audio content from the collection of voiceover tracks that is associated with the voice profile having the highest score.

In accordance with an embodiment, in connection with an advertising campaign 358, one or more of a plurality of voice tracks 359 can be selected, and combined with a background audio content based on a calculated prediction data indicative of which of a plurality of combinations of a background audio content (background track), with one or more voiceover audio content (voiceover tracks), are most likely to be associated with a positive user response.

In accordance with an embodiment, such prediction data can be determined by computing an expected performance of each background/voiceover combination, as described in further detail below.

### Media Style Repository

In accordance with an embodiment, a media style repository can be used to store analytical and/or descriptive metadata describing items of media content, for use in determining both a style of media content being accessed by, or otherwise provided to, a user, and an appropriate background audio content and/or voiceover audio content for use in generating a dynamic advertisement.

In accordance with an embodiment, the media style repository can be provided either within a memory or database of the media server itself, or alternatively can be provided external to the media server at an associated database or third-party database.

For example, as illustrated in Figure 2 above, in accordance with an embodiment, a media content item metadata can include, for each particular item of media content, an analytic data, such as a tempo metadata, consonance metadata, or pitch metadata, which describes those characteristics of that particular item of media content.

In accordance with an embodiment, a media content item metadata can also include, for each particular item of media content, a descriptive data, such as a genre metadata, mood metadata, lyrics metadata, keywords, or other characteristics of the particular item of media content.

In accordance with an embodiment, the advertisement generation service can use the metadata associated with a stream of media content, to generate an advertisement which a user may find particularly appealing.

For example, in accordance with an embodiment, the advertisement generation service can be configured to generate advertisements using background audio content and/or voiceover audio content that appear most appropriate to a tempo, genre, mood, lyrics, or other characteristics of media content currently being provided in a media content stream during a session by a particular user.

For example, in accordance with an embodiment, during a particular session that includes a selection of media content being streamed to the user, the system can perform an analysis of the tempos, and any weights assigned to the tempos, of the various music selections that the user is receiving during that session. A cumulative tempo of the music can be determined as being applicable to that particular session. An appropriate background audio content and/or voiceover audio content for use in creating a dynamic advertisement content can then be determined by the system, to be streamed during the particular session to the user.

For example, metadata indicating a fast-paced tempo of media content being streamed can influence the generation or selection of a similarly-paced background audio content and/or voiceover audio content. Similarly, a cumulative genre or mood of the music streamed can be analyzed, and the result of such analysis can be used by the system to select an appropriate background audio content and/or voiceover audio content for use in creating a dynamic advertisement content.

In accordance with an embodiment, a background audio content and/or voiceover audio content for can also be selected based on an analysis of keywords within a playlist description, or within a song's lyrics.

For example, in accordance with an embodiment, the text of playlist names or descriptions can be searched, and keywords discovered by the system through an analysis of such searches can be used to select a background audio content and/or voiceover audio content. For example, if a particular keyword is found in the user's playlist title such as "party", then that particular keyword can then be used to select a background audio content associated with a "party" genre and/or voiceover audio content associated with a voice profile describing a high energy level or upbeat voice.

In accordance with an embodiment, acoustic vectors can also be used to determine the Euclidean distance in acoustic vector space between two media content items, for use in determining an amount by which the two media content items are acoustically similar.

In accordance with an embodiment, using a combination of some or all of the above-described techniques, the system can use data or information about a current streaming session to select an appropriate background audio content (background track), and voiceover audio content (voiceover track), for use in generating a dynamic advertisement to be provided to a media device during a current streaming session.

### Realtime Determination of Usage Data

As described above, in accordance with an embodiment, an advertisement generation service can receive data or information describing, for example, a user profile associated with a user, to determine demographic data or information, and/or a metadata describing the media content played by the user within a current streaming session, and generate or select, in real-time, a dynamic advertisement for use with the streaming session.

Additionally, as described above, in accordance with an embodiment, the voiceover score for a particular user can be determined by analyzing usage data associated with the user's response to previously streamed advertisement content, and/or the responses of other users to previously streamed advertisement content.

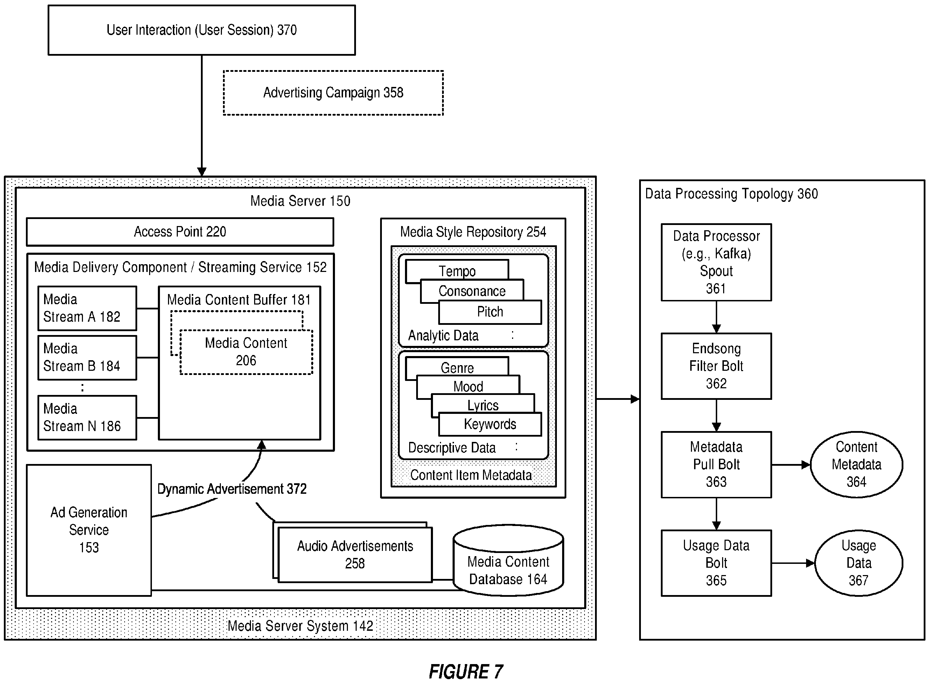

**Figure 7** illustrates a system for generation of dynamic advertisement content, including a data processing topology, in accordance with an embodiment.

In accordance with an embodiment, while the user uses a media server within a media server environment, for example by interacting with a media content data storage, a playlist function, or a search function, to retrieve, play, stream, or otherwise access media content items, a usage data can be collected, describing that user's interaction with the system. Usage data can include user interactions received at a media device associated with a user, for example in response to presentation of media content such as advertisement content.

In accordance with an embodiment, examples of user interactions can include, without limitation, start, stop, skip, fast-forward, and pause inputs, click-throughs, volume changes, "likes," user ratings or rankings. The usage data can also include, for example, play counts, completed listens, or listen durations.

In accordance with an embodiment, in a data processing topology 360, the usage data can be communicated to a data processor 361 such as, for example, an Apache Kafka instance.

In accordance with other embodiments, other types of data processors or data processing environments can be used. For example, a distributed real-time computation system, such as a Storm message queue, can be used to process streaming media content data, for example through the use of spouts and bolts to define data or information sources and manipulations that allow batch, distributed processing of streaming data.

In accordance with an embodiment, in such a topology, each spout can read from a queuing broker, such as a Kafka instance acting as a data broker; while each bolt can process a number of input streams and produce a number of new output streams, incorporating functions such as filters, streaming joins, streaming aggregations, and communication with databases.

For example, in accordance with an example embodiment, a Kafka spout can be configured to stream data describing a user's interaction 370 with the system, to an endsong filter bolt 362, which is configured to discard particular data tuples, for example those that are too short, or those of particular regions.

In accordance with an example embodiment, a metadata pull bolt 363 can be configured to obtain metadata for a streaming media content, and output data to a metadata store 364.

In accordance with an embodiment, a usage data bolt 365 can be configured to emit usage data 367 corresponding to media content or characteristics of media content (e.g., a top genre) streamed to the user for each event.

Such functionality can be used, for example, to determine the genre or mood of the music selected by and currently being provided in a media content stream to the user, or to determine a usage data associated with a streamed media content, in real time, so that the data or information can be used by the advertisement generation service, in association with an advertising campaign, to select an appropriate background audio content (background track), and voiceover audio content (voiceover track), for use in generating a dynamic advertisement 372.

### Determination of Prediction Data

As described above, in accordance with an embodiment, in connection with an advertising campaign, one or more of a plurality of voice tracks can be selected, and combined with a background audio content based on a calculated prediction data indicative of which of a plurality of combinations of a background audio content (background track), with one or more voiceover audio content (voiceover tracks), are most likely to be associated with a positive user response.

For example, in accordance with an embodiment, the system can stream media content for some period of time or session. When the stream time exceeds some amount of minutes (e.g., X minutes), the media server can be prompted to generate and insert the advertisement content into the stream. Such a prompt can be a request from a media device, or can be automatically sent to the media server after the X minutes.

In accordance with an embodiment, in response to the prompt, the advertisement generation service can receive data or information describing, for example, a user profile associated with a user, to determine demographic data or information, and/or a metadata describing the media content played by the user within a current streaming session; and can generate or select one or more different dynamic advertisements, each of which can include a different combination of background track and/or voiceover track, for insertion into the current media content stream.

In accordance with an embodiment, once generated, the advertisement content is streamed to the media device that requested the previous media content. After the advertisement content has been delivered and consumed, the next media content items can be streamed, and the method repeated. The obtained metadata, user profile data, and usage data can be purged and the time until the next break for advertisement content can be reset.

In accordance with an embodiment, for each streamed media content item, metadata can be obtained from the media style repository, as described above, user profile data obtained from a user profile data store, and/or usage data obtained using a data processing topology as described above, for use by the advertisement generation service. The advertisement content can be generated or selected by the advertisement generation service based at least in part on the aggregate of obtained data and metadata.

In accordance with an embodiment, if the stream time does not exceed some amount of minutes (e.g., X minutes), then the next media content item is streamed and the advertisement generation service determines if additional advertisement content should be generated and inserted into the stream, based on the new aggregation of data that includes the metadata from additional media content items, and/or any updated user profile data or usage data.

In accordance with an embodiment, when the stream time exceeds some amount of minutes (e.g., X minutes), then the additional or updated generated advertisement content is streamed to the media device that requested the previous media content. After the advertisement content has been delivered and consumed, the next media content items can be streamed, and the method repeated. The obtained metadata, user profile data, and usage data can be purged and the time until the next break for advertisement content can be reset.

In accordance with an embodiment, usage data can also be used at the time of creating an advertising campaign for distribution to a particular demographic. For example, an advertiser can use the usage data to determine how many voiceover versions of an advertising script to record, in order to optimize voiceover production efforts, and reduce production cost.

As described above, in accordance with an embodiment, the system can determine a collection of voiceover tracks that targets different demographic segments of an audience or demographic. The system can first determine a set of available voice profiles to utilize, and an approximate return on investment for including additional voice profiles.

For example, a direct-sold advertising campaign with a large reach can be run by presenting different advertisements having different combinations of voiceover tracks (and associated voice profiles) and background audio content. Users can be randomly allocated to groups according to the different voice profile and background audio content combinations.

In accordance with an embodiment, a larger number of voice profiles can be used. Usage data can be obtained that indicates how the different versions of advertisement (having different voiceover versions) perform across the different demographic segments. A prediction data describing an expected performance with perfect allocation can be determined and expressed as *E[Perf],* to determine how performance would have been, had every demographic segment received their most preferred advertisement.

In accordance with an embodiment, a smaller number of voice profiles can also be used, and an expected performance *Eₙ [Perf]* determined for only n perfectly allocated voice profiles (as opposed to the full set of available voice profiles). The relationship between *Eₙ[Perf]* and *n* can be evaluated, to assess the incremental return on investment for including more voice profiles; and a cut-off selected for an appropriate number of voice profiles to include in the set.

For example, using the above-described technique, the most suitable voice profiles for different markets can be determined. In accordance with an embodiment, such a determination can be repeated periodically, for example when new voice profiles are added.

In accordance with an embodiment, overall voiceover scores for a plurality of voice profiles can be evaluated, resulting in a distribution of voice profile candidates. Constraints can be applied, such as a maximum number of voice profiles to include within the collection, or a desired percentage of voiceover tracks corresponding to voice profiles with an overall voiceover score above a threshold.

For example, in accordance with an embodiment, the collection of voiceover tracks can be generated using the top N profiles with highest combined score.

### Generation of Dynamic Advertisements

As described above, in accordance with an embodiment, using a combination of some or all of the above-described techniques, the system can use data or information about a current streaming session to select an appropriate background audio content (background track), and voiceover audio content (voiceover track), for use in generating a dynamic advertisement to be provided to a media device during a current streaming session.

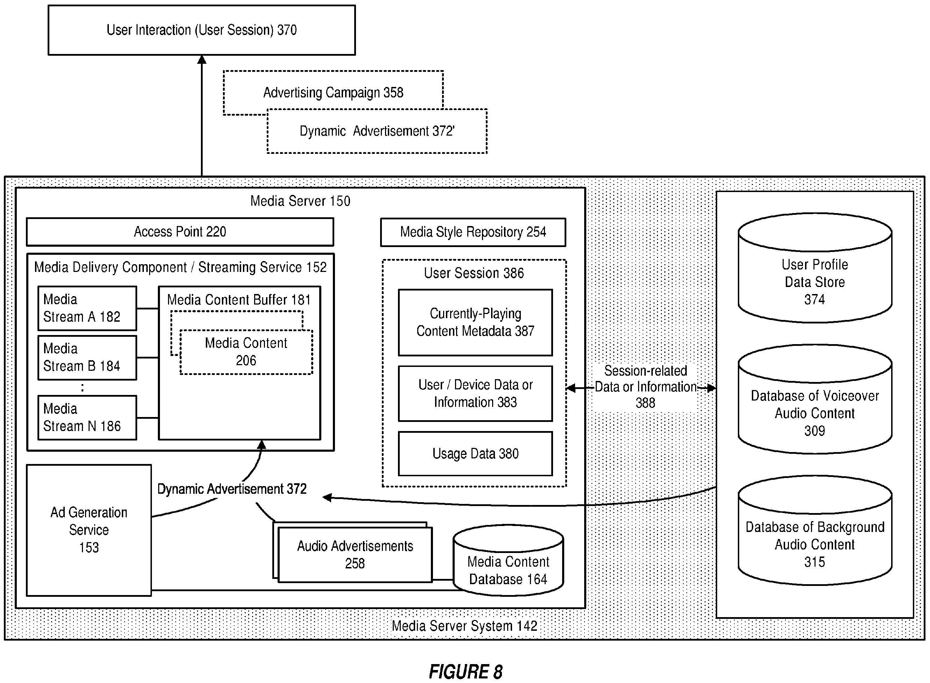

**Figure 8** further illustrates a system for generation of dynamic advertisement content, in accordance with an embodiment.

As illustrated in Figure 8, in accordance with an embodiment, the advertisement generation service can access a user profile data store 374 to obtain user profile data for a current user. The user profile can further include, or be associated with, additional data or information such as device metadata relating to a media device of the user, for example a physical geographic location of a media device, which can be used to predict the user's likely mood, and select appropriate background audio content and/or voiceover audio content for use in advertisement content.

For example, in accordance with an embodiment, the generation or selection of a background audio content or voiceover audio content can be determined based on the current weather, or can be related to a mood of the user inferred by the current weather; such that, if the weather is known to be currently stormy at the user's geographic location, then a background audio content or voiceover audio content may be selected to reflect a downbeat tempo or potentially gloomy mood of the user.

As another example, if an Internet protocol (IP) address of a Wi-Fi router is determined to belong to a fitness facility or gym, then a background audio content or voiceover audio content may be selected for a dynamic advertisement, based on that data or information, for example to reflect an upbeat or energetic tempo.

In accordance with an embodiment, the usage data that can be collected and stored, as described above, can include user interactions received at a media device while a particular media content is being streamed. The usage data associated with particular users can be stored within or otherwise associated with those users' profiles and with particular media content items, including advertisement content.

In accordance with an embodiment, usage data describing or corresponding to interactions performed by the user within the media application, or interactions performed at the media device on which the software application is running, can indicate the extent to which a particular advertisement content or creative might appeal to the user (or conversely, might not appeal to the user).

In accordance with an embodiment, such feedback can be used to construct or update a voiceover profile for a particular user, and/or to determine a prediction data indicative of the likelihood of particular advertisement content or creatives, such as those having a similar background audio content and/or voiceover audio content, being similarly associated with a positive user response.

In accordance with an embodiment, a media content can be associated with a positive user response by being followed by a subsequent user interaction indicative of a positive user response or a negative user response.

For example, an instruction to perform a playback volume increase received at a media device, in response to a presented advertisement, can be determined as a positive user response to that advertisement; whereas an instruction to perform a playback volume decrease, in response to that advertisement, can be determined as a negative user response to that advertisement.

For example, in accordance with an embodiment, the system (e.g., the media application) can determine, based on a received usage data, that the user starts skipping advertisements, or that the user tries to lower the volume of an item of advertisement content being presented, either by means of their software application, or using buttons of the media device. Such signals can indicate the appeal (or lack thereof) of the item of advertisement content to the user.

In accordance with an embodiment, such interactions performed by the user during presentation of items of advertisement content can also be used by the system in real-time to influence and improve the generation or selection of background audio content and voiceover audio content for advertisements provided to the user.

For example, in accordance with an embodiment, negative signals such as volume decreases, application focus changes, advertisement minimizations, attempted skips, and application exits, can be collected and weighted; together with positive signals such as volume increases, click-throughs (or click-through rate), audio/video completion rate, and "likes".

In accordance with an embodiment, the positive and negative user responses or signals can be combined, and corresponding scores determined, in the form of overall quality scores for a media content item, or voiceover scores for particular voice profiles, the voiceover scores being indicative of the likelihood of a particular voice profile being associated with a positive user response.

In accordance with an embodiment, the usage data can continue to be collected, to iteratively refine the advertisement generation, in a form of feedback loop. In accordance with an embodiment, quality scores, voiceover scores, and prediction data can be updated according to the updated usage data.

In accordance with an embodiment, a user profile data can be associated with particular background audio content items within a database or library of available background audio content. The system can determine an acoustic or collaborative filtering vector for each background audio content item based on, for example, a user's listening history and current streaming session, and/or the listening histories and streaming sessions of other users within the same user demographic segment, or with similar user profiles.

In accordance with an embodiment, the system can determine an advertisement music vector for the user that describes the type or style of background audio content that is most likely to be associated with a positive user response from the user. A positive user response can be indicated by, for example, receiving an input indicating selection of the advertisement, or some other interaction indicative of a positive user response. The system can then associate the advertisement music vector with the user profile for that user.

In accordance with an embodiment, user profile data can be associated with particular voice profiles and associated voiceover tracks. For example, the system can include or use a classifier that is trained to predict the likelihood of each voice profile in a set of available voice profiles being associated with a positive user response. The input to the classifier can be data or information from the user's profile, including the user's gender, age, location, language, and music profile, which can be analyzed together with usage data, to assess the likelihood of each voice profile being associated with a positive user response from the user.

In accordance with an embodiment, the classifier can be used to predict with respect to outcomes such as click-through rate, or completed listens, using usage data collected and determined based on previously delivered advertisements. The usage data can correspond to the particular user for whom a dynamic advertisement is being generated, or to other users within the same demographic segment as the particular user, or who have similar user profiles to the particular user.

For example, in accordance with an embodiment, the classifier can perform a logistic regression to determine a likelihood distribution for one or more outcomes over the set of available voice profiles. The system can associate a particular user's likelihood distribution over the set of available voice profiles with the user's profile (e.g., as part of a voiceover profile for the user).

In accordance with an embodiment, a plurality of users can be associated with a plurality of user demographic segments within a particular demographic, according to factors such as, for example, gender, age, location, language, or music profile. A background audio content and/or voiceover audio content can be selected for users within each particular demographic segment based on an expected performance of the combined background audio content and voiceover audio content for that demographic segment.

In accordance with an embodiment, prediction data for a plurality of background audio content items and voiceover audio content items can be generated using usage data associated with those items. Usage data for a plurality of users, which is collected based on previously delivered advertisements, can be used to determine an expected performance for different combinations of background audio content items and voiceover audio content items.

For example, given a user demographic segment s, background tracks *b₁...bₙ,* and voiceover tracks *v₁*...*vₘ*, the system can determine, using logistic regression, an expected performance pₛ(bᵢ,vⱼ) for the demographic segment. A background audio content and voiceover audio content combination having the maximum expected performance for the demographic segment can be selected and used to generate a dynamic advertisement for a user within that demographic segment.

In accordance with an embodiment, while usage data is updated, the prediction data can also be updated, to help determine an optimal point at which to finalize on a single choice maximizing the expected performance, or to determine when to wait and gather more data.

In accordance with an embodiment, the media server can determine, for a user session 386, user/device data or information 383, usage data 380, and currently-playing media content 387 for all or a portion of the session, and utilize that session-related data or information 388 in combination with the media style repository; for use by the advertisement generation service.

In accordance with an embodiment, the generation or selection of background audio content and voiceover audio content for use with dynamic advertisements can be optimized by employing an online component and/or an offline component.

In accordance with an embodiment, the online component can be used during an active advertising campaign that targets a particular demographic. During the execution of the advertising campaign, usage data is collected and prediction data can be determined and updated. The system can, in response to determining that the advertising campaign is running or that usage data is otherwise available, select background audio content and voiceover audio content based on the determined prediction data.

In accordance with an embodiment, the offline component can be used when an active advertising campaign is not running. For example, when an active advertising campaign is not running, usage data might not be available or might not be updated.

In accordance with an embodiment, during the offline component, the background audio content and voiceover audio content can be selected according to different criteria.

For example, the system can select a background audio content by determining the background audio content item that is most similar (e.g., nearest in Euclidean distance in acoustic vector space) to media content currently being streamed during a user's listening session, or to media content (or media content characteristics) associated with a user's profile (e.g., taste profile).

In accordance with an embodiment, the system can select a voiceover audio content by analyzing a user's voiceover profile and determining which voice profile within a set of available voice profiles has the highest voiceover score. The system can then select a voiceover from a collection of voiceover tracks, which corresponds to the highest scoring voice profile.

In accordance with an embodiment, for both the online component and the offline component, a dynamic advertisement can be generated in real time or dynamically, in response to a prompt or request, or in combination with the current streaming of a media content to a media device.

### Dynamic Advertisement Process

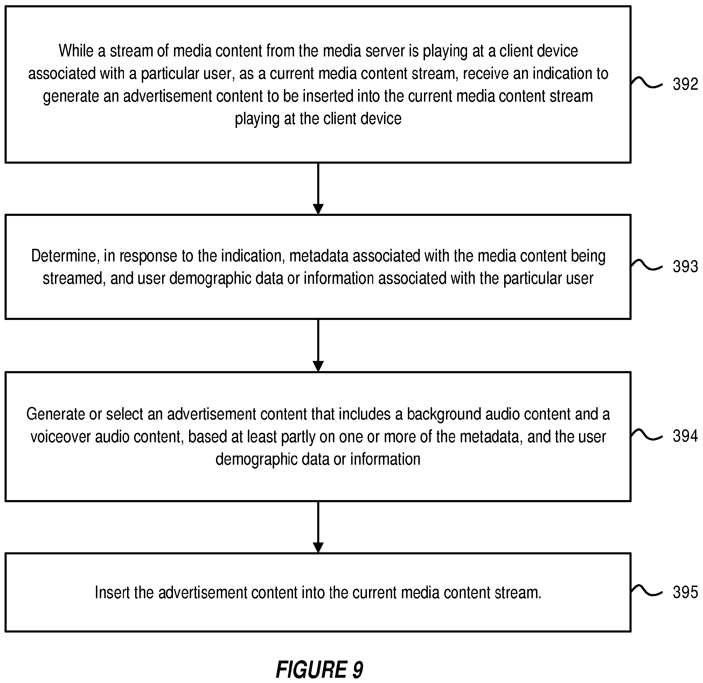

**Figure 9** illustrates a process for generating dynamic advertisements, in accordance with an embodiment.

As illustrated in Figure 9, in accordance with an embodiment, the method includes, at step 392, while a stream of media content from the media server is playing at a client device associated with a particular user, as a current media content stream, receiving an indication to generate an advertisement content to be inserted into the current media content stream playing at the client device.

At step 393, the method further includes determining, in response to the indication, metadata associated with the media content being streamed, and user demographic data or information associated with the particular user.

At step 394, the method further includes at least one of generating or selecting an advertisement content that includes a background audio content and a voiceover audio content, based at least partly on one or more of the metadata, and the user demographic data or information.

At step 395, the advertisement content is inserted into the current media content stream.

### Voiceover Collection Process

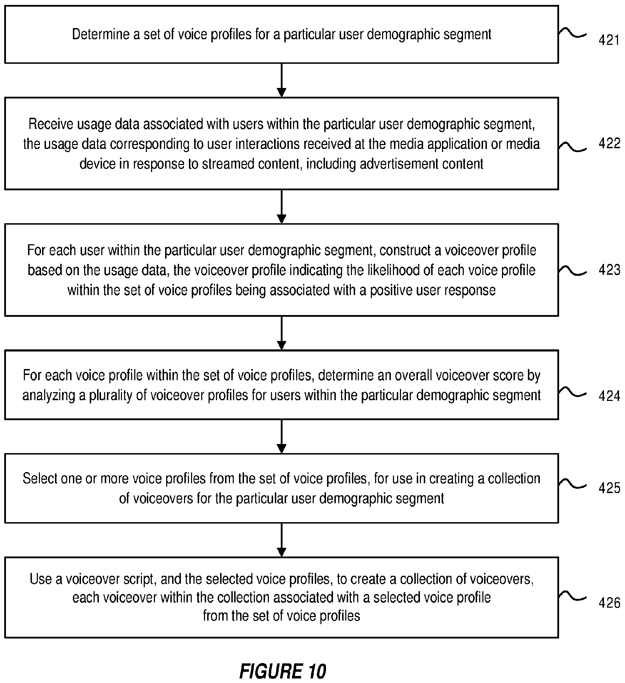

**Figure 10** illustrates a process for determining a collection of voiceover tracks, in accordance with an embodiment.

As illustrated in Figure 10, in accordance with an embodiment, at step 421, a set of available voice profiles is determined for a particular user demographic segment.

At step 422, usage data associated with users within the particular user demographic segment is received, wherein the usage data corresponds to user interactions received at the media application or media device in response to streamed content, including advertisement content.

At step 423, for each user within the particular user demographic segment, a voiceover profile is constructed based on the usage data, wherein the voiceover profile indicates the likelihood of each voice profile within the set of available voice profiles being associated with a positive user response.

At step 424, for each voice profile within the set of available voice profiles, an overall voiceover score is determined by analyzing a plurality of voiceover profiles for users within the particular demographic segment.

At step 425, one or more voice profiles from the set of available voice profiles are selected, for use in creating a collection of voiceover tracks for the particular user demographic segment.

At step 426, a voiceover script and the selected voice profiles are used to create a collection of voiceover tracks, wherein each voiceover within the collection associated with a selected voice profile from the set of voice profile.

Embodiments can be conveniently implemented using one or more conventional general purpose or specialized digital computers, computing devices, machines, or microprocessors, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product which is a non-transitory computer readable storage medium (media) having instructions stored thereon/in which can be used to program a computer to perform any of the processes of the present invention. Examples of storage mediums can include, but are not limited to, floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or other types of storage media or devices suitable for non-transitory storage of instructions and/or data.

The foregoing description of embodiments has been provided for the purposes of illustration and description. It is not intended to be exhaustive or to limit the invention to the precise forms disclosed. Many modifications and variations will be apparent to the practitioner skilled in the art.

For example, while the techniques described above generally illustrate examples of digital media content environments that include a music streaming service such as Spotify, and streamed music or song content, the systems and techniques described herein can be similarly used with other types of media content environments, and other types of streamed data or media content.

In addition, while the above examples illustrate the use of technologies such as Apache Storm, Apache Hadoop, and Apache Kafka, to process large amounts of usage data, in accordance with various embodiments, other forms of data processors or data processing environments can be used.

The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalents.

### Numbered Example Embodiments

In view of the embodiments described hitherto, the technology described in this disclosure thus encompasses the following non-limiting numbered example embodiments:
NEE1. A system for generation or selection of advertisement content in real-time, for use with a digital media content environment and media content streams, comprising:
   one or more computers (142), including a media server (150) executing thereon that is configured to receive requests (196) from client devices for media content, and to stream media content (208), including advertisement content, to the client devices in response to the requests; and
   a memory (144) provided at the one or more computers, storing instructions that, when executed, cause the system to, while a stream of media content from the media server is playing at a client device (102) associated with a particular user, as a current media content stream:
      receive an indication to generate advertisement content (154) to be inserted into the current media content stream playing at the client device,
      determine, in response to the indication, metadata (313) associated with the media content being streamed, and user demographic data or information (307) associated with the particular user,
      at least one of generate or select an advertisement content (319) that includes a combination of
         a background audio content (317) combined with
         a voiceover audio content (310),
         based at least partly on one or more of the metadata associated with the media content being streamed, and the user demographic data or information associated with the particular user, and
      insert the advertisement content (294) as combined into the current media content stream.
NEE2. The system of embodiment NEE1, wherein the instructions cause the system to, in response to determining that the usage data is available, select the background audio content and the voiceover audio content based on a prediction data indicative of a likelihood that a particular combination of background audio content and voiceover audio content will be associated with a positive user response.
NEE3. The system of embodiment NEE2, wherein the prediction data corresponds to one or more of a click-through rate or a number of completed listens.
NEE4. The system of embodiment NEE1, wherein the instructions cause the system to, in response to determining that the usage data is not available,
   select the background audio content to match one or both of: characteristics of the media content being streamed, as described by the metadata, and a taste profile associated with the particular user, and
   select the voiceover audio content based on a voiceover profile associated with the particular user, the voiceover profile indicative of a likelihood that a particular voice profile associated with the voiceover audio content will be associated with a positive user response.
NEE5. The system of embodiment NEE1, wherein the voiceover audio content is selected from a collection of voiceover tracks, each voiceover within the collection of voiceover tracks being associated with a voice profile describing sound qualities of a voice performing the voiceover.
NEE6. The system of embodiment NEE1, wherein the usage data describes user interactions received in response to previously streamed advertisement content, and is associated with one or both of the particular user or a plurality of other users.
NEE7. The system of embodiment NEE1, wherein the usage data comprises a plurality of inputs, each input being associated with a positive signal or a negative signal, and wherein positive signals and negative signals are collected and weighted for a particular media content item, to determine a score for the particular media content item.
NEE8. The system of embodiment NEE7, wherein the score is associated with a particular voice profile associated with the particular media content item.
NEE9. The system of embodiment NEE1, wherein the user profile data associated with the particular user comprises an advertisement music vector indicating a background audio content that is most likely to be associated with a positive user response.
NEE10. A method for generation or selection of advertisement content in real-time, for use with a digital media content environment and media content streams, comprising:
   while a stream of media content from the media server is playing at a client device associated with a particular user, as a current media content stream, receiving an indication to generate advertisement content to be inserted into the current media content stream playing at the client device;
   determining, in response to the indication, metadata associated with the media content being streamed, and user demographic data or information associated with the particular user;
   at least one of generating or selecting an advertisement content that includes a combination of
      a background audio content combined with
      a voiceover audio content,
      based at least partly on one or more of the metadata associated with the media content being streamed, and the user demographic data or information associated with the particular user; and
   inserting the advertisement content as combined into the current media content stream.
NEE11. A non-transitory computer readable storage medium, including instructions stored thereon that when read and executed by one or more computers cause the one or more computers to perform the method comprising:
   providing, at one or more computers, a media server executing thereon that is configured to receive requests from client devices for media content, and to stream media content, including advertisement content, to the client devices in response to the requests; and
   while a stream of media content from the media server is playing at a client device associated with a particular user, as a current media content stream,
      receiving an indication to generate advertisement content to be inserted into the current media content stream playing at the client device;
      determining, in response to the indication, metadata associated with the media content being streamed, and user demographic data or information associated with the particular user;
      at least one of generating or selecting an advertisement content that includes a combination of
         a background audio content combined with
         a voiceover audio content,
         based at least partly on one or more of the metadata associated with the media content being streamed, and the user demographic data or information associated with the particular user; and
      inserting the advertisement content as combined into the current media content stream.
NEE12. A process for use by a digital media content environment for determining a collection of voiceover tracks, comprising:
   determining (421) a set of available voice profiles for a particular user demographic segment (421);
   receiving (422) usage data associated with users within the particular user demographic segment is received, wherein the usage data corresponds to user interactions received at the media application or media device in response to streamed content, including advertisement content;
   for each user within the particular user demographic segment, constructing (423) a voiceover profile based on the usage data, wherein the voiceover profile indicates the likelihood of each voice profile within the set of available voice profiles being associated with a positive user response;
   for each voice profile within the set of available voice profiles, determining (424) an overall voiceover score is by analyzing a plurality of voiceover profiles for users within the particular demographic segment;
   selecting (425) one or more voice profiles from the set of available voice profiles, for use in creating a collection of voiceover tracks for the particular user demographic segment; and
   using (436) a voiceover script and the selected voice profiles to create a collection of voiceover tracks, wherein each voiceover within the collection associated with a selected voice profile from the set of voice profile.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality.

## Claims

1. A system for generation or selection of advertisement content in real-time, for use with a digital media content environment and media content streams, comprising:
one or more computers (142), including a media server (150) executing thereon that is configured to receive requests (196) from client devices for media content, and to stream media content (208), including advertisement content, to the client devices in response to the requests (196); and
a memory (144) provided at the one or more computers, storing instructions that, when executed, cause the system to, while a stream of media content from the media server is playing at a client device (102) associated with a particular user, as a current media content stream:
receive an indication to generate advertisement content (154) to be inserted into the current media content stream playing at the client device;
determine, in response to receiving the indication, metadata (313) associated with the media content being streamed, and user demographic data or information (307) associated with the particular user;
at least one of generate or select an advertisement content (319) that includes a combination of:
i) a background audio content (317) combined with
ii) a voiceover audio content (310),
based at least partly on one or more of the metadata associated with the media content being streamed, and the user demographic data or information associated with the particular user; and
insert the advertisement content (294) as combined into the current media content stream.

2. The system of claim 1, wherein the instructions cause the system to, in response to determining that the usage data is available, select the background audio content and the voiceover audio content based on a prediction data indicative of a likelihood that a particular combination of background audio content and voiceover audio content will be associated with a positive user response.

3. The system of claim 2, wherein the prediction data corresponds to one or more of a click-through rate or a number of completed listens.

4. The system of any one of the claims 1-3, wherein the instructions cause the system to, in response to determining that the usage data is not available,
select the background audio content to match one or both of: characteristics of the media content being streamed, as described by the metadata, and a taste profile associated with the particular user, and
select the voiceover audio content based on a voiceover profile associated with the particular user, the voiceover profile indicative of a likelihood that a particular voice profile associated with the voiceover audio content will be associated with a positive user response.

5. The system of any one of the claims 1-4, wherein the voiceover audio content is selected from a collection of voiceover tracks, each voiceover within the collection of voiceover tracks being associated with a voice profile describing sound qualities of a voice performing the voiceover.

6. The system of any one of claims 1-5, wherein the usage data describes user interactions received in response to previously streamed advertisement content, and is associated with one or both of the particular user or a plurality of other users.

7. The system of any one of claims 1-6, wherein the usage data comprises a plurality of inputs, each input being associated with a positive signal or a negative signal, and wherein positive signals and negative signals are collected and weighted for a particular media content item, to determine a score for the particular media content item.

8. The system of claim 7, wherein the score is associated with a particular voice profile associated with the particular media content item.

9. The system of any one of claims 1-8, wherein the user profile data associated with the particular user comprises an advertisement music vector indicating a background audio content that is most likely to be associated with a positive user response.

10. A method for generation or selection of advertisement content in real-time, for use with a digital media content environment and media content streams, comprising:
while a stream of media content from the media server is playing at a client device associated with a particular user, as a current media content stream, receiving an indication to generate advertisement content to be inserted into the current media content stream playing at the client device;
determining, in response to the receiving the indication, metadata associated with the media content being streamed, and user demographic data or information associated with the particular user;
at least one of generating or selecting an advertisement content that includes a combination of:
i) a background audio content combined with
ii) a voiceover audio content,
based at least partly on one or more of the metadata associated with the media content being streamed, and the user demographic data or information associated with the particular user; and
inserting the advertisement content as combined into the current media content stream.

11. Computer program, comprising instructions which, when executed on at least one processor, cause the at least one processor to carry out the method according to claim 10.

12. A carrier comprising the computer program of claim 11, wherein the carrier is any one of the following: an electronic signal, an optical signal, a radio signal or computer-readable storage medium.
